# EUROPÄISCHE PATENTSCHRIFT

(11) **EP 2 473 753 B1**
(45) Veröffentlichungstag und Bekanntmachung des Hinweises auf die Patenterteilung: **11.03.2015**
(21) Anmeldenummer: 10760942.2
(22) Anmeldetag: 30.08.2010
(51) Int. Cl.: A47C 27/06, F16F 1/02

(54) **VORSPANNEINRICHTUNG FÜR EIN FEDERELEMENT**
BIASING DEVICE FOR A SPRING ELEMENT
DISPOSITIF DE PRÉCONTRAINTE POUR UN ÉLÉMENT RESSORT

(30) Priorität: 04.09.2009 DE 202009005230 U
(43) Veröffentlichungstag der Anmeldung: 11.07.2012
(73) Patentinhaber: Froli Kunststoffwerk Heinrich Fromme, Inh. Margret Fromme-Ruthmann e. Kfr., 33758 Schloß Holte-Stukenbrock (DE)
(72) Erfinder:
(74) Vertreter: Flötotto, Hubert
(86) Internationale Anmeldenummer: PCT/EP2010/062653
(87) Internationale Veröffentlichungsnummer: WO 2011/026816

(56) Entgegenhaltungen:
- CH-A- 246 625
- DE-A1- 3 836 100
- US-A- 3 626 523
- US-A- 5 924 681

## Beschreibung

### Technisches Umfeld

Die Erfindung betrifft ein Federelement mit einer Vorspanneinrichtung welches in Taschen von Matratzen, auf Latten eines Lattenrostes oder in gepolsterten Sitzelementen einsetzbar ist, wobei das Federelement ein als Auflageteller ausgebildetes Oberteil sowie ein als Fußplatte ausgebildetes Unterteil umfasst, und wobei zwischen dem Auflageteller und der Fußplatte ein Federkörper angeordnet ist, der zur Begrenzung des Federweges mit einer Vorspanneinrichtung für den Einbau des Federelementes zusammenwirkt.

### Stand der Technik

Aus dem Stand der Technik sind so genannte Federelemente mit einer Vorspanneinrichtung bekannt. Diese werden vornehmlich dazu verwendet, um einerseits einer nachlassenden Federkraftwirkung mit der Zeit vorzubeugen. Bei der bekannten Vorspanneinrichtung wird diese, nachdem das Federelement zusammengedrückt wird, jochartig auf das Federelement angesetzt, um auf diese Weise eine Vorspannung an dem Federelement zu erreichen bevor es in eine Tasche einer Federkernmatratze eingesetzt wird. Dies wird aus dem Grund gemacht, um in bestimmten Bereichen der Federkernmatratze vorgespannte Bereiche vorzuhalten, wo insbesondere geringere Belastungen, wie im Randbereich der Federkernmatratze, gegeben sind.

Bei dieser bekannten Art der Vorspanneinrichtung wird es als nachteilig angesehen, dass diese Vorspannung lediglich als Montagehilfe dient, bevor ein Federelement eingesetzt wird.

Aus dem Stand der Technik ist gemäß der US 5,924,681 ein Federelement mit einer Vorspanneinrichtung bekannt, welche auf Latten eines Lattenrostes oder in gepolsterten Sitzelementen einsetzbar ist. Das Federelement verfügt über ein Oberteil sowie über ein Unterteil, wobei zur Vorspannung des Federelementes der Federkörper als solches von einem Ringband umgeben ist. Bei dieser Art der Vorspannung wird es als nachteilig angesehen, dass insbesondere die Flexibilität des Federelementes bei Belastung eingeschränkt ist.

### Aufgabe

Der Erfindung stellt sich somit das Problem ein Federelement mit einer Vorspanneinrichtung bereitzustellen, welches insbesondere den Einsatz von vorgespannten Federelementen wesentlich erleichtert und die eine bessere Flexibilität des Federelementes unter Belastung bereitstellt.

### Lösung

Das Problem wird durch den Hauptanspruch gelöst, wobei vorteilhafte Ausgestaltungen und Weiterbildungen der Erfindung sich aus den Unteransprüchen ergeben.

Infolge der erfindungsgemäßen Ausbildung kann nun ein in der Fertigung bereits vorgespanntes Federelement leicht und einfach eingesetzt werden, weil die Vorspanneinrichtung als integriertes Bauteil zum Federelement gehörig ausgebildet ist. Somit bedarf es auch keiner besonderen Ausbildung der Matratze. Hierzu wird das vorgespannte Federelement in seiner bleibenden Vorspannung bzw. in der gewünschten Vorspannung in eine Matratze oder dergleichen eingesetzt. Die Vorspanneinrichtung ist hierbei als integriertes Element zur Begrenzung des Federweges im Federelement angeordnet. Das integrierte Element umfasst hierbei ein Band, welches die Vorspannung des Federkörpers aufnimmt.

In vorteilhafter Weiterbildung der Erfindung besteht das als Vorspanneinrichtung wirkende integrierte Element aus einem Kunststoffband, welches zwischen Auflageteller und Fußplatte gespannt ist. Dabei ist das Kunststoffband über die Kopfplatte gespannt, wobei es in an dem Auflageteller und der Auflageplatte jeweils angeformten Schlitzen angesetzt werden kann. Das Kunststoffband als solches kann hierbei auch als Ringband ausgebildet sein, so dass es um das Federelement angesetzt werden kann. Das Kunststoffband kann hierbei auch als Stegband ausgebildet sein, welches in der Zentralachse des Federelementes angeordnet ist, um auf diese Weise die Vorspannung zu erzielen. Bei dieser Ausführungsform ist es besonders vorteilhaft, dass eine Vorspannung gegeben ist, die eine richtungsunabhängige Belastung des Federelementes im vorgespannten Zustand zulässt. In Weiterbildung des Stegbandes, weist dies jeweils endseitig angeformte Querstege zur Flächenhintergreifung von Kopf- und Fußplatte auf.

### Beschreibung der Zeichnungen

Ein Ausführungsbeispiel der Erfindung ist in den Zeichnungen rein schematisch dargestellt und wird nachfolgend näher beschrieben. Es zeigt:
- Figur 1: eine perspektivische Ansicht eines vorgespannten Federelementes in einer ersten Ausführungsform;
- Figur 2: eine weitere perspektivische Darstellung eines Federelementes einer weiteren Ausführungsform;
- Figur 3: eine Ansicht eines Federelementes mit einer Vorspanneinrichtung in einer anderen Ausführungsform und;
- Figur 4: eine Seitenansicht des Federelementes gemäß der Figur 3.

### Ausführungsbeispiele

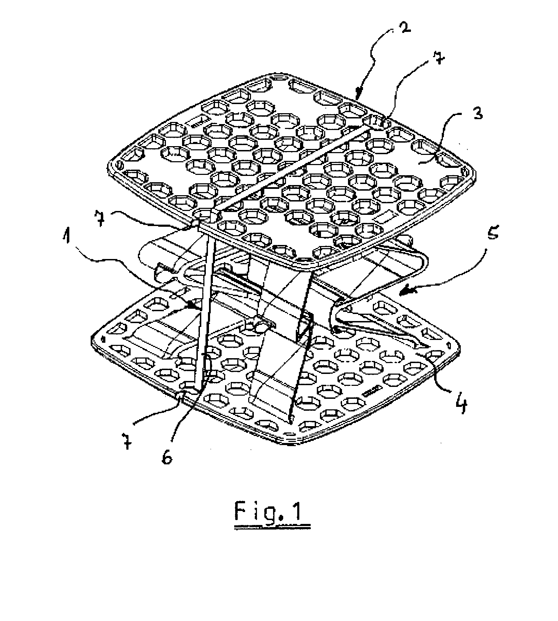

Die Figuren 1, 2 und 3 zeigen jeweils Vorspanneinrichtungen 1 für ein Federelement 2, welches ein als Auflageteller ausgebildetes Oberteil 3 sowie ein als Fußplatte ausgebildetes Unterteil 4 umfasst. Dabei ist zwischen dem Auflageteller 3 und der Fußplatte 4 ein Federkörper 5 angeordnet, wobei die Vorspanneinrichtung 1 zur Begrenzung des Federweges des Federkörpers 5 vorgesehen ist. Gemäß der Erfindung wird nun vorgeschlagen, dass die Vorspanneinrichtung 1 als ein integriertes Element zur Begrenzung des Federweges im Federelement 2 angeordnet ist. Somit kann das einzelne Federelement 2 mit einer Vorspannung beaufschlagt werden, die bleibend für das Federelement 2 wirkt.

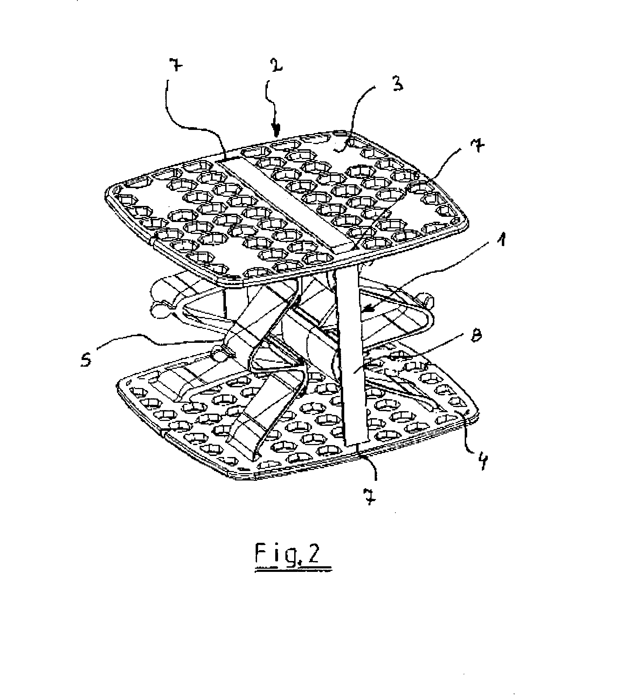

Dabei umfasst das integrierte Element ein Band 6, welches die Vorspannung des Federkörpers 5 aufnimmt und somit den Federweg reduziert. Dabei besteht das als Vorspanneinrichtung 1 wirkende integrierte Element aus einem Kunststoffband, welches zwischen Auflageteller 3 und Fußplatte 4 gespannt ist. Dabei ist, wie in den Figuren 1 und 2 zu erkennen ist, das Kunststoffband 6 über die Kopfplatte 3 und die Fußplatte 4 gespannt und geführt. Wie insbesondere in der Figur 1 zu erkennen ist, ist das Kunststoffband 6 in an dem Auflageteller 3 und der Fußplatte 4 jeweils eingeformten Schlitzen 7 angesetzt. Dabei kann das Kunststoffband 6 auch als Ringband ausgebildet sein, so dass es, wie beispielsweise in der Figur 1 dargestellt, in das Federelement 2 angesetzt werden kann, nach dem es zusammengedrückt wurde, so dass es dann die entsprechende Vorspannung erhält.

Eine andere Ausführungsform zeigt die Figur 2, wo hier ein Flachband 8 vorgesehen wird, welches durch die Schlitze 7 entsprechend hindurch gefädelt wird, wobei es dann nach der Vorspannung an der Fußplatte befestigt wird.

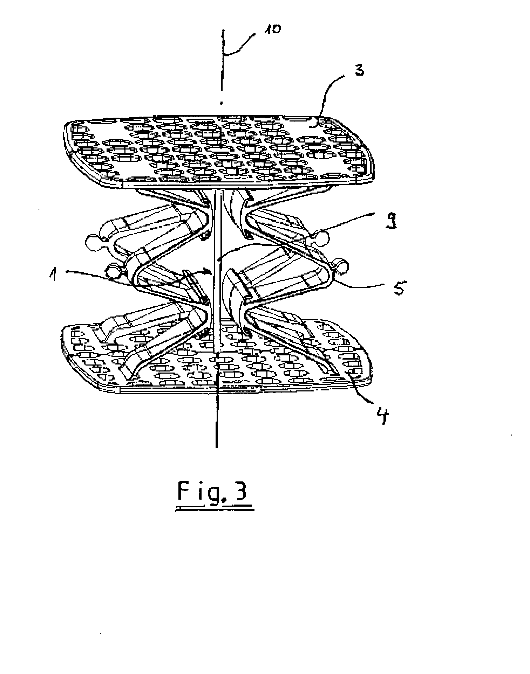

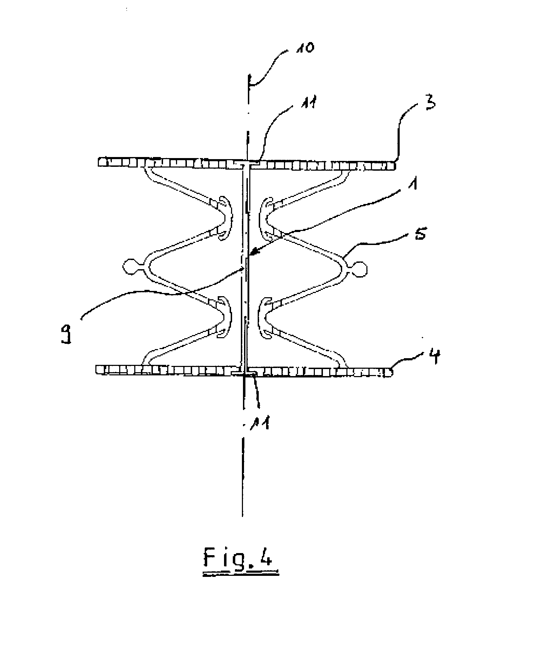

Nach einer besonders vorteilhaften Ausgestaltung der Erfindung, dargestellt in den Figuren 3 und 4, ist hierbei das Kunststoffband 6 als Stegband 9 ausgebildet, welches in der Zentralachse 10 des Federelementes 2 angeordnet ist. Wie in der Zusammenschau der Figuren 1 und 2 zu erkennen ist, weist hierbei das Stegband 9 jeweils endseitig angeformte Querstege 11 zur Flächenhintergreifung von Auflageteller 3 und Fußplatte 4 auf. Bei dieser Art der Ausführungsform der Vorspannung ist insbesondere die Federbelastung nach allen Seiten gegeben, weil die Vorspannung hier zentral wirkt.

### Bezugszeichenliste

- 01: Vorspanneinrichtung
- 02: Federelement
- 03: Auflageteller
- 04: Fußplatte
- 05: Federkörper
- 06: Band
- 07: Schlitze
- 08: Flachband
- 09: Stegband
- 10: Zentralachse
- 11: Querstege

## Patentansprüche

1. Federelement (2) mit Vorspanneinrichtung (1) welches in Taschen von Matratzen, auf Latten eines Lattenrostes oder in gepolsterten Sitzelementen einsetzbar ist, wobei das Federelement (2) ein als Auflageteller (3) ausgebildetes Oberteil sowie ein als Fußplatte (4) ausgebildetes Unterteil umfasst, und wobei zwischen dem Auflageteller (3) und der Fußplatte (4) ein Federkörper (5) angeordnet ist, der zur Begrenzung des Federweges mit der Vorspanneinrichtung (1) zusammenwirkt,
**dadurch gekennzeichnet,**
**dass** die Vorspanneinrichtung (1) als integriertes Element zur Begrenzung des Federweges im Federelement (2) angeordnet ist, welches als Kunststoffband (6) ausgebildet und in der Zentralachse (10) des Federelementes (2) angeordnet ist und das die Vorspannung des Federkörpers (5) zwischen dem Auflageteller (3) und der Fußplatte (4) aufnimmt, wobei der Federkörper (5) derart gespannt ist, das er bei Belastung des Auflagetellers (3) eine richtungsunabhängige Belastung des Federelementes (2) im vorgespannten Zustand zulässt.

2. Federelement nach Anspruch 1,
**dadurch gekennzeichnet,**
**dass** das Kunststoffband (6) jeweils endseitig angeformte Querstege (11) zur Flächenhintergreifung von Auflageteller (3) und Fußplatte (4) aufweist.

3. Federelement nach Anspruch 2,
**dadurch gekennzeichnet,**
**dass** das Kunststoffband (6) vorzugsweise als Stegband (9) ausgebildet ist.

4. Federelement nach dem Oberbegriff des Anspruchs 1,
**dadurch gekennzeichnet,**
**dass** das Kunststoffband (6) über den Auflageteller (3) und/oder der Fußpatte (4) gespannt ist.

5. Federelement nach Anspruch 4,
**dadurch gekennzeichnet,**
**dass** das Kunststoffband (6) in an dem Auflageteller (3) und der Fußplatte (4) jeweils eingeformten Schlitzen (7) ansetzbar ist.

6. Federelement nach Anspruch 5,
**dadurch gekennzeichnet,**
**dass** das Kunststoffband (6) als Ringband ausgebildet ist.

## Claims

1. Spring element (2) having a biasing device (1) that can be used in pockets of mattresses, on slats of a slatted frame, or in upholstered seat elements, wherein the spring element (2) comprises a top part configured as a supporting disk (3), and a bottom part configured as a base plate (4) and wherein a spring member (5) which cooperates with the biasing device (1) in order to limit the excursion of the spring, is arranged between the supporting disk (3) and the base plate (4)
**characterized in**
**that** the biasing device (1) is arranged within the spring element (2) as an integrated element (6) for limiting the excursion of the spring, which is configured as a plastic strip (6) and is arranged in the central axis (10) of the spring element (2) and which absorbs the bias of the spring member (5) between the supporting disk (3) and the base plate (4), wherein the spring member (5) is biased in such a manner that it allows a direction-independent loading of the spring element (2) in the biased state under loading of the supporting disk (3).

2. The spring element according to claim 1,
**characterized in**
**that** the plastic strip (6) has transverse webs (11) moulded on at each end for gripping behind the surface of supporting disk (3) and base plate (4).

3. The spring element according to claim 2,
**characterized in**
**that** the plastic strip (6) is preferably configured as a web strip (9).

4. The spring element according to the preamble of claim 1,
**characterized in**
**that** the plastic strip (6) is biased over the supporting disk (3) and/or the base plate (4).

5. The spring element according to claim 4,
**characterized in**
**that** the plastic strip (6) can be placed in slots (7) formed on each of the supporting disk (3) and base plate (4).

6. The spring element according to claim 5,
**characterized in**
**that** the plastic strip (6) is configured as an annular strip.

## Revendications

1. Elément à ressort (2) équipé d'un dispositif de précontrainte (1), qui peut être inséré dans des poches de matelas, sur des lattes d'un sommier à lattes ou dans des éléments d'assise rembourrés, l'élément à ressort (2) comprenant une partie supérieure réalisée sous forme de plaque d'appui (3) et une partie inférieure réalisée sous forme de plaque de pied (4) et étant disposé entre la plaque d'appui (3) et la plaque de pied (4) un corps à ressort (5) qui coopère avec le dispositif de précontrainte (1) pour limiter la course du ressort,
**caractérisé en ce**
**que** le dispositif de précontrainte (1) est disposé dans l'élément à ressort (2) sous forme d'un élément intégré de limitation de la course du ressort, qui se présente sous forme d'une bande de plastique (6) et est disposé dans l'axe central (10) de l'élément à ressort (2) et absorbe la précontrainte du corps à ressort (5) entre la plaque d'appui (3) et la plaque de pied (4), le corps à ressort (5) étant, en cas de charge exercée sur la plaque d'appui (3), précontraint de manière à permettre une charge indépendante de la direction de l'élément à ressort (2) en état précontraint.

2. Elément à ressort selon la revendication 1,
**caractérisé en ce**
**que** la bande de plastique (6) présente des traverses formées respectivement au niveau terminal (11) et s'engrenant par l'arrière sur la plaque d'appui (3) et la plaque de pied (4).

3. Elément à ressort selon la revendication 2,
**caractérisé en ce**
**que** la bande de plastique (6) est réalisée de préférence sous forme de bande formant une bride (9).

4. Elément à ressort selon le préambule de la revendication 1,
**caractérisé en ce**
**que** la bande de plastique (6) est tendue au-dessus de la plaque d'appui (3) et/ou de la plaque de pied (4).

5. Elément à ressort selon la revendication 4,
**caractérisé en ce**
**que** la bande de plastique (6) peut être posée dans des fentes (7) pratiquées sur la plaque d'appui (3) et la plaque de pied (4).

6. Elément à ressort selon la revendication 5,
**caractérisé en ce**
**que** la bande de plastique (6) se présente sous forme d'une bande annulaire.
